# EUROPEAN PATENT SPECIFICATION

(11) **EP 1 846 974 B1**
(45) Date of publication and mention of the grant of the patent: **04.11.2009**
(21) Application number: 05729804.4
(22) Date of filing: 29.03.2005
(51) Int. Cl.: H01M 8/10

(54) **MEMBRANE-ELECTRODE ASSEMBLIES FOR FUEL CELL, THEIR MANUFACTURE AND USE AND FUEL CELLS INCORPORATING THEM**
MEMBRAN-ELEKTRODENBAUGRUPPEN FÜR BRENNSTOFFZELLEN, IHRE HERSTELLUNG, VERWENDUNG UND DIESE ENTHALTENDE BRENNSTOFFZELLEN
ENSEMBLES MEMBRANE-ELECTRODE POUR PILE A COMBUSTIBLE, LEUR FABRICATION ET LEUR UTILISATION, ET PILES A COMBUSTIBLE COMPRENANT CES ENSEMBLES

(30) Priority: 11.01.2005 IT FI20050002
(43) Date of publication of application: 24.10.2007
(73) Proprietor: Acta S.p.A., 56040 Crespina (IT)
(72) Inventor: BERT, Paolo, I-22070 Como (IT); CATANORCHI, Stefano, I-57025 Piombino (IT); GIAMBASTIANI, Giuliano, I-50031 Barberino di Mugello (IT); TAMPUCCI, Alessandro, I-57014 Collesalvetti (IT); VIZZA, Francesco, I-50141 Firenze (IT); BIANCHINI, Claudio, 50131 Firenze (IT)
(74) Representative: Gervasi, Gemma
(86) International application number: PCT/EP2005/051423
(87) International publication number: WO 2006/074829

(56) References cited:
- WO-A-2004/036674
- US-A- 3 234 050
- US-A- 4 364 803
- US-A- 4 959 132
- US-A- 5 853 798

## Description

### Field of the invention

The present invention relates to the field of fuel cell. More particularly, it relates to a fuel cell incorporating a membrane-electrode assembly (MEA) where the electrocatalysts are embedded in the anion conducting membrane with which they form a unique, inseparable body.

### State of the art

Fuel cells are electrochemical devices that convert the chemical energy of a reaction directly into electrical power. In such cells, a fuel (generally hydrogen, alcohols, carbohydrates or saturated hydrocarbons) and an oxidant (generally oxygen from air) are fed in a continuous supply to the electrodes. Theoretically, a fuel cell can produce electrical energy for as long as the fuel and oxidant are supplied to the electrodes. In reality, degradation or malfunction of the components limits the practical operating life of fuels cells.

Nowadays, a variety of fuel cells in different stages of development are known. Considering, in particular, fuel cells in which the membrane-electrode assembly (hereinafter referred to as MEA) the followings can be mentioned as examples: Polymer Electrolyte Fuel Cell (PEFCs) fuelled with H₂, Direct Alcohol Fuel Cell (DAFC) fuelled with alcohols and polyalcohols (methanol, ethanol, ethylene glycol, to mention but a few), and, more generally, Direct Oxidation Fuel Cells (DOFC) fuelled with any hydrogen-containing liquid, solid or gaseous fuel (sugars, carbohydrates, aldehydes, saturated hydrocarbons, carboxylic acids, alkali metal borohydrides, hydrazine).

Characterizing and essential components of any fuel cell of the types mentioned above are the electrolyte, formed by an ion-exchange polymeric membrane, and the electrodes. These contain metals or metal particles, generally dispersed on conductive, porous support materials, that have the role of accelerating the rates of the electrode reactions. Besides allowing for ionic transport, the membrane has the role of separating the reagents (for example, H₂ and O₂ in PEMFC and alcohol and O₂ in DAFC) as well as performing as electronic insulator. The ion-exchange polymer electrolyte membrane may comprise either a proton (H⁺) conducting polymer or an anion, generally OH⁻, conducting polymer.

The ensemble of electrodes and membrane constitutes the so-called membrane-electrode assembly. The MEAs of the art are generally realized by a ion-exchange polymer electrolyte membrane on both sides of which are mechanically pressed the electrodes (on one side the cathode, positive electrode, and the anode, negative electrode onto the other side). The electrodes are generally formed by conductive and gas-permeable materials (for example graphitic materials) on which are deposited metal complexes, metals or metal particles, even nanosized. Catalysts usually employed for oxidizing the fuel (for example H₂ in the PEFC and methanol or ethanol in DAFC) are platinum alone, platinum in conjunction with other metals (ruthenium, ruthenium-molybdenum, tin, for instance) or nickel in conjunction with iron and/or cobalt.

It is known by those who are skilled in the art that the electrodes and the ion-exchange membrane must be mutually contiguous and that optimizing the mutual conjunction of these components optimizes the performance of the fuel cell. Indeed, a continuous contact between the electrodes and the membrane must be maintained in order to not interrupt the ionic communication between anode and cathode. Due to many factors, for example the degradation of the membrane and of the electrode conductive support, the communication between the anode and cathode may be interrupted and the fuel cell ceases to work. In order to reduce or even overcome this drawback, the electrocatalysts should be directly deposited on both major surfaces of the ion-exchange membranes. However, in the case of proton-exchange membranes for use in a fuel cell, the cathode side of the membrane cannot be directly metallized by the metal element that catalyzes the oxygen reduction because the water that forms during the cell functioning would hinder the adsorption and diffusion of oxygen. For other purposes, such as the preparation of metal film electrodes with improved sensitivity for ammonia detection (Taiwan patent n°. 461925), the metallization of both sides of Nafion^{®} membranes by catalytically active elements is a viable procedure. Likewise, patent US 5,906,716 describes cation-exchange membranes where, on at least one side of the membrane, there are applied finely divided metals that catalyze the formation of water from H₂ and O₂.

Increasing research and development activities are being focused on anion-exchange membrane fuel cells. These fuel cells have MEAs containing an anion-exchange membrane which allows hydroxide ion conduction from the cathode to the anode. The advantages of using an anion-exchange membrane over a cation-exchange membrane are manifold, especially for DAFCs (for example, the reversible potentials Eᵣₑᵥ⁰ of ethanol and methanol are -0.743 and -0.770 V in alkaline medium and +0.084 and +0.046 V in acidic medium, respectively). Indeed, the favorable oxidation potentials allow for the use of non-noble metal catalysts in PEFC, DOFC and DAFC (patent application "Platinum-free electrocatalysts material "WO 2004/036674). A further advantage of using an alkaline anion-exchange membrane over using a proton-exchange membrane is provided by the reduced alcohol crossover as the electro-osmotic drag of the hydrated hydroxide ion opposes alcohol transport. Finally, both major surfaces of anion-exchange membranes can be coated with catalytically active metal species since water is produced at the anode and not at the cathode. Equations 1 and 2 that account for the electrochemical reactions occurring at the anode of a direct ethanol fuel cell equipped with either a cation-exchange membrane (1) or an anion-exchange membrane (2):

(1) C₂H₅OH + 3 H₂O → 2 CO₂ + 12 H⁺ + 12 e⁻

(2) C₂H₅OH + 12 OH⁻ → 2 CO₂ + 9 H₂O + 12 e⁻

Therefore, it would be highly desirable to develop and manufacture MEAs where the anode and cathode are integral part of the anion-exchange membrane with no need of distinct components held together mechanically. Such a goal implies coating one major surface of the membrane with the metal catalyst for fuel oxidation, and the other with metal catalyst for oxygen reduction, with both the catalysts adhering tightly, stably and permanently to the surfaces of the membrane. Obviously, the catalysts, commonly in the form of nanostructured metal particles, must reside in a conductive environment to allow electrons to flow through the electrode and be transferred outside via the backing current collector.

Patent US 5,853,798 reports a method for the preparation of an electrode on solid polymer anion-exchange membrane to increase rates of reaction at a reaction surface of the membrane, with particular reference to electrodialytic-type electrochemical cells used for salt splitting. The described process includes the steps of soaking a polymer anion-exchange membrane in a solution containing an anionic entity wherein a desired metal catalyst is contained so that anions containing the metal catalyst exchange into the membrane by electrostatic attraction. Thereafter, the membrane is exposed to a reducing agent so that the metal catalyst is reduced to a catalytically active metallic form.

Patent US 3,351,487 describes a method for plating the surfaces and the inner hollows of ion-exchange hollow fiber membranes with an electrically conductive metallic film made of a single metal element. The described process includes the steps of contacting one side of the membrane with a solution of a compound of the metal to be plated and contacting the opposite side of the membrane with a solution of a reagent capable of reducing the metal compound through the diffusion into the membrane.

### Descriptions of the drawings

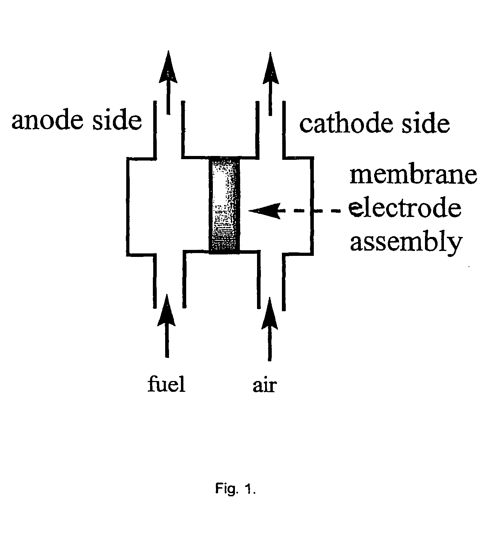

Fig. 1 represents a cross-section schematic view of a simplified fuel cell operating with the MEA of the invention.
Fig. 2 (a-b) shows a schematic view of the device used to coat the major surfaces of an anion-exchange membrane with a metal (a); exploded perspective view (b).
Fig. 3 (a-b) shows a schematic view of the device used to support on the metal-coated major surfaces of an anion-exchange membrane with electrocatalytic materials (a); exploded perspective view (b).

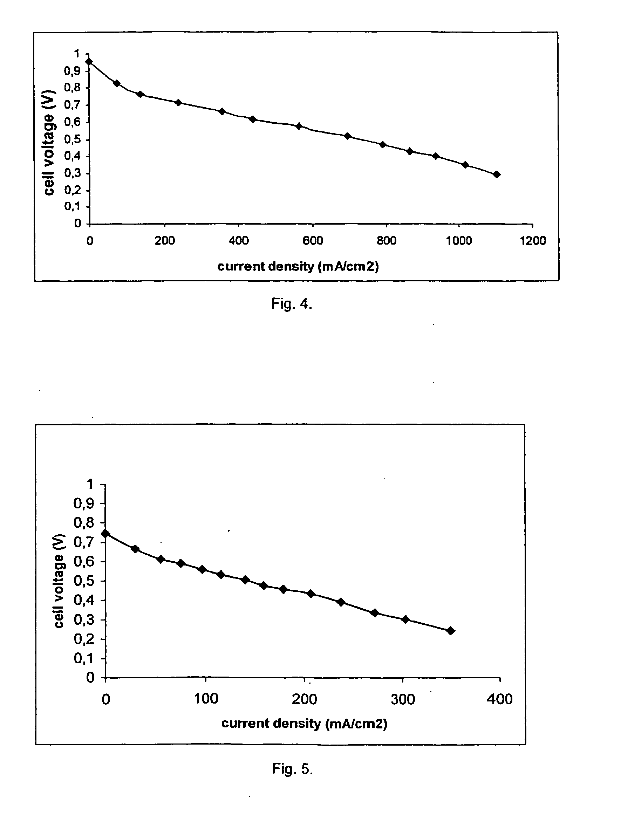

Fig. 4 shows a polarization curve of a PEFC fuelled with pure H₂ (1 bar) and oxygen (1 bar) at 60°C, containing a MEA of the invention prepared as described in EXAMPLE 2.
Fig. 5 shows a polarization curve of a DMFC fuelled with an aqueous solution of 10 wt. % methanol at 50 °C (1 bar O₂) containing a MEA of the invention prepared as described in EXAMPLE 7.
Fig. 6 shows a polarization curve of a self-breathing DEFC fuelled with an aqueous solution of 10 wt. % ethanol at 30 °C, containing a MEA of the invention prepared as described in EXAMPLE 3.
Fig. 7 shows the variation of the current intensity with time at a constant potential of 0.5 V for a monoplanar cell bearing the MEA of the invention described in EXAMPLE 3.

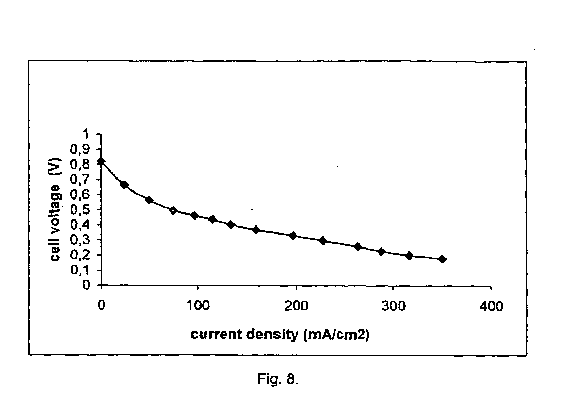

Fig. 8 shows a polarization curve of a self-breathing DAFC fuelled with an aqueous solution of 10 wt. % ethylene glycol at 25 °C, containing a MEA of the invention prepared as described in EXAMPLE 5.

### Detailed description of the invention

The present invention describes MEAs comprising anion-exchange membranes wherein the anodic and cathodic electrocatalysts are embedded in the membrane forming a unique, inseparable body, and also provides a method to make the MEAs of the invention which are suitable for use in electrochemical devices, including PEFC, DAFC, DOFC, electrolyzers and like.

The Applicant has found that anion-exchange membranes can be transformed, in a simple and practical manner, into above-mentioned MEAs by coating the major surfaces of the membrane with a porous and electrically conductive metal layer different for each surface that is then use as support material for catalytically active metals or metal compounds. The MEAs of the present invention may include any alkaline anion-exchange polymer membrane, for example membranes based on polyolefins, fluorinated ethylene/polypropylene copolymers, polysulfones, ethylene oxide-polyepichlorohydrin copolymers, prepared by either grafting with radiation of suitable energy, chloromethylation or sulfochloromethylation. Among commercial anion-exchange membranes that can be used to make the MEAs of the present invention can be cited "Tokuyama Soda AMH membrane" (Tokuyama Soda Co. Ltd., Japan), Morgane ADP and Morgane AD (Solvay S. A.), Selemion AMW (Asahi Glass), RAI R4030 membrane (Pall RAI, Inc. N.Y., USA), to say but a few.

According to the invention, the porous and electrically conductive metal layer, acting, as mentioned above, as a support for catalysts, can be deposited evenly on both the major surfaces of the anion-exchange membrane or can even penetrate the membrane itself, obviously without reaching the contact with the metal layer deposited on the opposite surface (for this will cause short circuit in the MEAs).

Preferred metal compounds to coat the major surfaces of anion-exchange membranes with a porous metal layer are compounds or salts of a metal selected from the class consisting of Ag, Au, Pt, Ni, Co, Cu, Pd, Sn, Ru, more preferably nickel and cobalt citrate, potassium tetrachloroplatinate, silver and cobalt nitrate, potassium tetrachloroaurate.

Preferred reducing agents have a reducing potential greater than the reducing potential of the metal compound from which the metal is to be reduced and are selected in the class consisting of hydrazine, hydrazine hydrate, alkaline metal borohydrides, alkaline metal hydrosulfite, alkaline metal sulphites, to mention but a few.

The catalytically active metals or metal compounds used according the invention are those known to be able to act as anode catalysts or, respectively, cathode catalysts for fuel-cell electrodes. The anode catalysts are preferably chosen in the class consisting of Pt, Ni, Co, Fe, Ru, Sn, Pd and mixture thereof, while cathode catalysts are preferably chosen in the class consisting of cobalt, nickel and rhodium phthalocyanine or tetraphenylporphyrin, Co salen, Ni salen (salen = N,N'-bis(salicylidene)ethylendiamine), silver nitrate, just to mention a few.

The MEAs according to the invention can be manufactured, for example, by a procedure that involves the following steps:
a) treatment of an anion-exchange membrane, of any shape and size, with a concentrated aqueous solution of a strong Brønsted base for some hours, followed by rinsing with deionized water;
b) adsorbing an anionic entity, wherein a desired metal for metallization, preferably nickel or cobalt, is contained, on one major side of the membrane by ion-exchange reaction between counter-ions of the membrane and the metal-containing anionic entity;
c) treatment of the surface of the membrane on the opposite side than that treated on step (b) with an aqueous solution of a metal salt capable of forming a layer of an insoluble metal hydroxide/oxide over the membrane surface by reaction with the OH⁻ groups contained in the membrane, preferably a silver salt if the metal on the other side is either nickel or cobalt, until all the surface is coated by a precipitate of metal oxide;
d) reduction of the adsorbed metal anions on one side of the membrane and of the supported metal oxide on the opposite side of the membrane to a metallic form by means of an aqueous solution of a reducing agent of the state of the art;
e) adsorption of a catalytic metal precursor or a mixture of catalytic metal precursors, dispersed in a solvent, over a porous metallic layer of the metal-coated membrane that will act as a cathode in a fuel cell. Above-mentioned catalytic metal precursors may be known in the state of the art as capable of generating active cathode catalysts in fuel cells (for example nickel or cobalt complexes with polyazamacrocycles);
f) adsorption of a catalytic metal precursor or a mixture of catalytic metal precursors, dispersed in a solvent, on the opposite porous metal layer of the metal-coated membrane described in step (e). Above-mentioned catalytic metal precursors may be known in the state of the art as capable of generating, upon reduction, active anode catalysts in fuel cells (for example Pt, Ni, Co, Fe, Ru, Sn, Pd compounds and mixture thereof);
g) reducing above-mentioned metal precursors adsorbed on the surface of the metal-coated anode-side membrane to catalytically active metal particles with an aqueous solution of a reagent capable of reducing to a metallic form the metal ion contained in above-mentioned metal precursors, for example NaBH₄ in aqueous solution.

Step (d), involving treatment of the major surface of the membrane, whereon the metal anions are adsorbed, with an aqueous solution of a reducing agent may precede step (b) and (c) that, in turn, can occur in the inverse order, i. e. step (c) can precede (b).

The use of a metal anionic entity in step (b) (or in step (c) if the mutual order between them is inverted) allows the above-mentioned metal anions to exchange with the mobile and replaceable hydroxyl ions (OH⁻) electrostatically associated with the fixed cationic components of the membrane, generally quaternary amines cations. The metal anionic entity can therefore permeate the membrane and the extent of permeation will depend on both the structure of the parent membrane and the contact time between the aqueous solution of the metal anionic entity and the surface of the membrane. For the purpose of the present invention, the above-mentioned contact time is preferably shorter than 2 hours at room temperature for any parent membrane. A longer contact time will obviously increase the permeation depth, making the metallized membrane useless for the fabrication of the MEAs of the invention. The process of above-mentioned coating may be repeated several times until a uniform coating of both major surfaces of the membrane is obtained.

Preferred reducing agents have a reducing potential greater than the reducing potential of the metal compound from which the metal is to be reduced and is selected from the class consisting of hydrazine, hydrazine hydrate, alkali metal borohydrides, alkaline metal hydrosulfite, alkaline metal sulphites, to mention but a few.

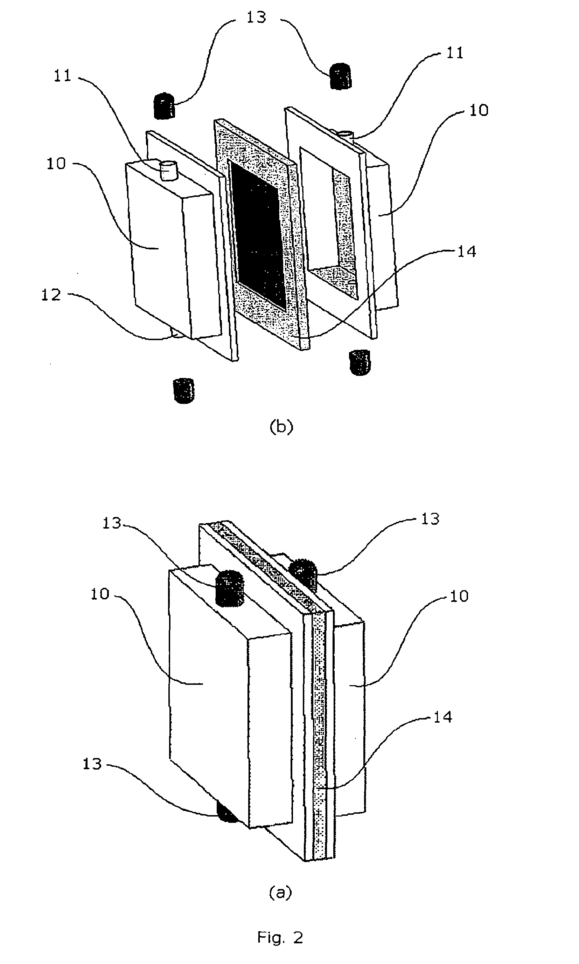

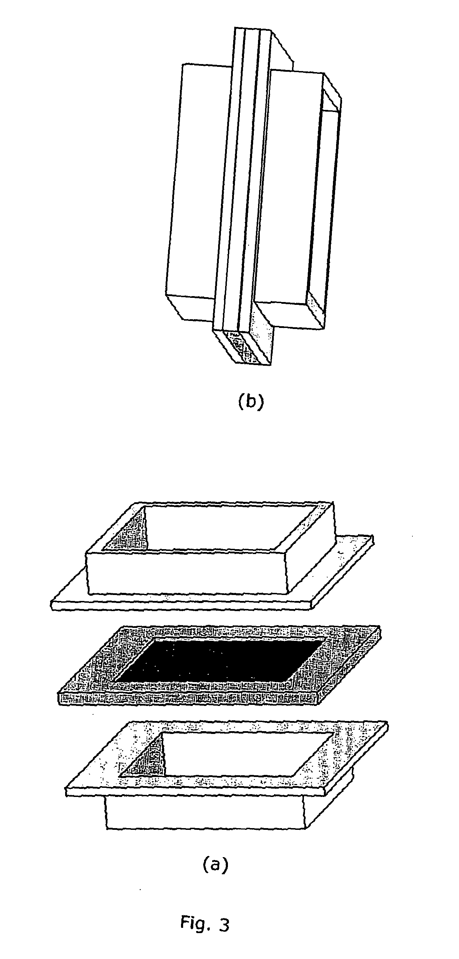

According to a particular embodiment of the invention, the above-described process can be carried out using a device as shown in Fig. 2 and 3. More particularly, the device shown in Fig. 2(a-b) can be used to coat the major surfaces of an anion-exchange membrane with a layer of a porous and conductive metal (steps a-d).

As shown in Fig. 2, the device is formed essentially by two small basins (10), each provided with inlet and outlet opening (respectively 11 and 12) closed with the respective plug (13), able to fit together the respective edge (14), and formed by a gasket (15) to be interposed between the two small basins and acting also as supporting frame for the membrane to be treated.

A single sheet of above-mentioned membrane is positioned by a gasket which provides a seal between the membrane sheet and the joined sections that are held firmly in position by a bolt. Each compartment separated by the membrane has an inlet to introduce the reactant solutions and rinse the membrane surface, generally with deionized water, and an outlet for the removal of the exhausted reagent solutions and rinsing liquids.

For other specific purposes than the fabrication of a MEA, only one major side of the membrane is coated using the procedure detailed above, leaving the other side uncoated.

The device shown in Fig. 3 (a-b), essentially analogue to the previous (different just for the small basins (10) lacking in the bottom and in the inlet and outlet openings) can be instead used to deposit the electro-catalytic materials on the previously metallized surfaces of the membrane (step e-g). In this device, the anion-exchange membrane coated on both the major surfaces with a porous and conductive metal layer, is positioned by a gasket which provides a seal between the membrane sheet and the joined sections of the device which are held firmly in position by a bolt, thus forming two compartments. Each compartment consists of a simple tank, the bottom of which is constituted by a major side of the above-mentioned metal-coated membrane. A solution of a catalytic metal precursor selected to generate the anode catalyst is poured into the tank at room temperature so that of the whole bottom surface is covered by above-mentioned solution. After the time required to adsorb the catalytic metal precursor onto the porous metal layer, the remaining solution is removed and the tank is rinsed with deionized water. Then, an aqueous solution of a reagent capable of reducing the adsorbed metal ion of the selected catalytic metal precursor, NaBH₄ for instance, is poured into the tank so that the whole bottom surface is covered by the above-mentioned solution of a reducing agent. After the desired time at room temperature, all the liquid phase covering the bottom of the tank is removed and the bottom surface is rinsed with deionized water.

The procedure detailed above is repeated on the opposite side of the membrane, except for depositing a solution of a selected metal precursor capable of generating a cathode catalyst for a fuel cell, with no need of a reducing agent.

Preferred catalytic metal precursors to anode catalysts are iron, cobalt and nickel acetates and mixtures thereof coordinated to synthetic resins such as those described in the patent application WO 2004/036674, hexachloroplatinic acid, tetrachloroauric acid, palladium bis-acetate, palladium dichloride, iridium trichloride, rhodium trichloride, tin tetrachloride, ruthenium trichloride, just to say mention a few.

Preferred catalytic metal precursors to cathode catalysts are cobalt, nickel and rhodium phthalocyanine or tetraphenylporphyrin, Co salen Ni salen (salen = N,N'-bis(salicylidene)ethylendiammine), silver nitrate, just to mention a few.

Preferred reducing agents have a reducing potential greater than the reducing potential of the metal compound from which the metal is to be reduced and is selected from the class consisting of hydrazine, hydrazine hydrate, alkali metal borohydrides, alkaline metal hydrosulfite, alkaline metal sulphites, to mention but a few.

The MEA of the invention has demonstrated very satisfactory performance in fuel cells operating at low temperatures, in particular in the temperature range from 20 °C to 90 °C, and more particularly in PEFC fuelled with H₂, DAFC fuelled with alcohols and polyalcohols (methanol, ethanol, ethylene glycol), and Direct Oxidation Fuel Cells (DOFC) fuelled with glucose, aldehydes, saturated hydrocarbons, carboxylic acids, alkali metal borohydrides, hydrazine.

Standard cell PEFC and DAFC hardware as well as the test cell for measuring membrane conductivity have been purchased from Fuel Cell Technologies (Albuquerque, NM, USA). Electrochemical characterization of the MEAs and fuel cells has been carried out with a Princeton PARSTAT 2273 potentiostat/galvanostat.

The cell resistance of above-mentioned fuel cells depends on the parent anion-exchange membrane used to make the MEA of the invention and is appreciably affected neither by the porous metal coating nor by the catalyst deposition procedures. Likewise, the alcohol crossover in the case of DAFC has been found to depend on the parent anion-exchange membrane whose permeation to alcohols is apparently unaffected by the metal-coating procedure.

In general, the choice of the anode electrocatalyst depends on the fuel. Iron-cobalt-nickel catalysts are preferable for electro-oxidation of methanol and ethanol, and cobalt-nickel catalysts are preferable for electro-oxidation of ethylene glycol and polyalcohols, including sugars.

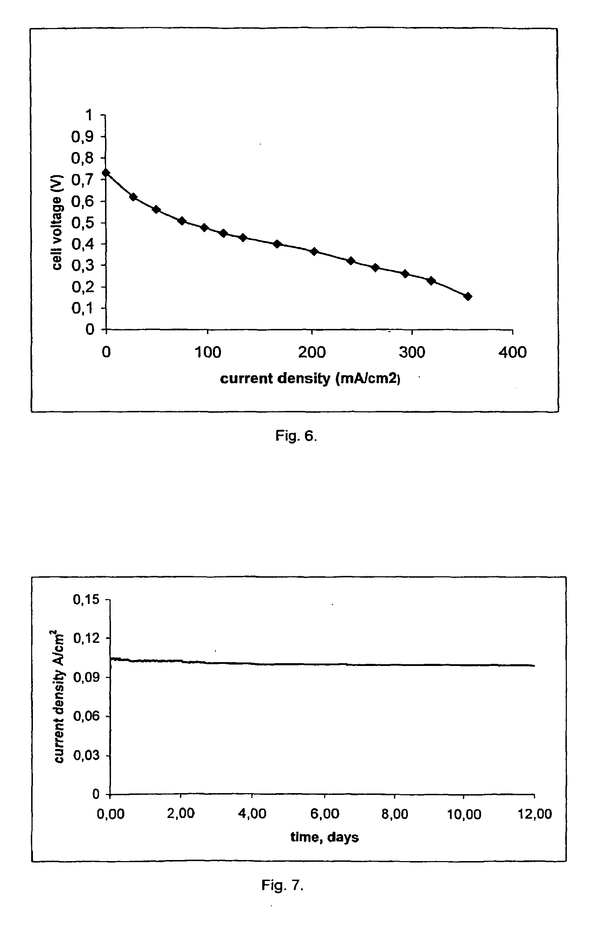

The MEAs of the invention show excellent stability with time and temperature (Fig. 7) on condition that the latter is maintained below 90°C.

The present invention is further described by the following examples.

### EXAMPLE 1

1) A Morgane AD (Solvay S. A.) anion-exchange membrane cut to a size of 4 cm by 4 cm was positioned and sealed in the device shown in Fig.2 as described above wherein the dimensions of the two external compartments were 3 cm x 3 cm x 0.5 cm for a total volume of 4.5 mL. Both sides of the membrane sheet, each exposed surface measuring 9 cm², were exposed to 1 molar solution (hereafter "M") potassium hydroxide (KOH) to exchange the membrane to a hydroxide ion form. After 24 hours, the two compartments were drained of the KOH solutions through outlets 3 and 4 of Fig. 2. Both sides of the membrane were then rinsed with deionized water.
2) Through inlet 1 of Fig. 2 was introduced in the corresponding compartment 4.5 mL of a nickel(II) ion solution in water consisting of either 92.7 g nickel hydroxide and 192.13 g of citric acid per liter of solution or 290 g nickel citrate hydrate (SHOWA Chemicals) per liter of solution.
3) Through inlet 2 of Fig. 2 was introduced in the corresponding compartment 4.5 mL of a silver nitrate solution in water consisting of 170 g silver nitrate per liter.
4) After 1.5 hours, outlets 3 and 4 of Fig. 2 were opened and the liquids contained in the two compartments were allowed to drain. Both compartments of the device of Fig. 2 were then rinsed three times with deionized water, and the outlets 3 and 4 were re-sealed.
5) Each compartment was then filled with 4.5 mL of a water solution of NaBH₄ consisting of 152 g NaBH₄ dissolved per liter. After 3 hours, the liquids were allowed to drain through outlets 3 and 4. The compartments were rinsed with deionized water.

### EXAMPLE 2

1) A metal-coated membrane prepared as described in EXAMPLE 1 was removed from the device shown in Fig. 2 and positioned in the device shown in Fig. 3.
2) 5 mL of solution of cobal phthalocyanine (STREM) in dimethylformamide (hereinafter "DMF")/(tetrahydrofuran (hereinafter "THF") (1:1, v:v), obtained by dissolving 5 g of cobalt phthalocyanine per liter, was deposited on the membrane surface coated with silver (9 cm²). After 2 hours at room temperature, the membrane surface was rinsed with deionized water.
3) The device shown in Fig. 3 was turned upside down, leaving exposed for manipulation the side of the membrane coated with nickel. A 3 mL portion of a water solution of hexachloroplatinic, H₂PtCl₆, obtained by dissolving 1 g H₂PtCl₆ per 0.1 liter, was poured in the tank having its bottom constituted by the membrane surface coated with nickel. After 2 hours, all the liquid covering the membrane surface was removed from the tank, which was rinsed with deionized water. After the last rinsing, the above-mentioned membrane surface was covered by a 5 ml portion of the aqueous NaBH₄ solution described at point 5 and left standing for 1 hour. Afterwards, all the liquid covering the membrane surface was removed from the tank and the membrane surface was rinsed with deionized water.
4) The catalyzed membrane was removed form the device shown in Fig. 3 and soaked in 1 M KOH for 2 h to give, after drying in the air at 30 °C for 2 hours, a MEA of the invention.

### EXAMPLE 3

1) A metal-coated membrane prepared as described in EXAMPLE 1 was removed from the device shown in Fig. 2 and positioned in the device shown in Fig. 3.
2) 5 mL of solution of cobalt meso-tetraphenylporphyrin (STREM) in DMF/THF (1:1, v:v), obtained by dissolving 5 g of cobalt meso-tetraphenylporphyrin per liter, was deposited on the membrane surface coated with silver (9 cm²). After 2 hours at room temperature, the membrane surface was rinsed with deionized water.
3) The device shown in Fig. 3 was turned upside down, leaving exposed for manipulation the side of the membrane coated with nickel. A 3 mL portion of an acetone solution of a metal complex consisting of equivalent amounts of iron, cobalt and nickel acetates coordinated by a synthetic resin, obtained by dissolving 40 g of the metal-containing resin per liter, was poured in the tank having its bottom constituted by the membrane surface coated with nickel. The synthetic resin was made by reacting, according to patent application WO 2004/036674, 4-{1-[(2,4-di(substituted)-phenyl)-hydrazono]-alkyl}-benzene-1,3-diol with phenol and formaldehyde in the presence of NaOH in water/ethanol at 100°C. After 2 hours, all the liquid covering the membrane surface was removed from the tank, which was rinsed with deionized water. After the last rinsing, the above-mentioned membrane surface was covered by a 5 ml portion of the aqueous NaBH₄ solution described at point 5 and left standing for 1 hour. Afterwards, all the liquid covering the membrane surface was removed from the tank and the membrane surface was rinsed with deionized water.
4) The catalyzed membrane was removed form the device shown in Fig. 3 and soaked in 1 M KOH for 2 h to give, after drying in the air at 30 °C for 2 hours, a MEA of the invention.

### EXAMPLE 4

1) A Selemion (Asahi Glass) anion-exchange membrane cut to a size of 4 cm by 4 cm was positioned and sealed in the device shown in Fig. 2 as described above wherein the dimensions of the two external compartments were 3 cm x 3 cm x 0.5 cm for a total volume of 4.5 mL. Both sides of the membrane sheet, each exposed surface measuring 9 cm², were exposed to 1 M solution potassium hydroxide (KOH) to exchange the membrane to a hydroxide ion form. After 24 hours, the two compartments were drained of the KOH solutions through outlets 3 and 4 of Fig. 2. Both sides of the membrane were then rinsed with deionized water.
2) Through inlet 1 of Fig. 2 was introduced in the corresponding compartment 4.5 mL of a nickel(II) ion solution in water consisting of either 92.7 g nickel hydroxide and 192.13 g of citric acid per liter of solution or 290 g nickel citrate hydrate (SHOWA Chemicals) per liter of solution.
3) Through inlet 2 of Fig. 2 was introduced in the corresponding compartment 4.5 mL of a silver nitrate solution in water consisting of 170 g of silver nitrate per liter.
4) After 1.5 hours, outlets 3 and 4 of Fig. 2 were opened and the liquids contained in the two compartments were allowed to drain. Both compartments of the device of Fig. 2 were then rinsed three times with deionized water, and the outlets 3 and 4 were re-sealed.
5) Each compartment was then filled with 4.5 mL of a water solution of NaBH₄ consisting of 140 g NaBH₄ dissolved per liter. After 3 hours, the liquids were allowed to drain through outlets 3 and 4. The compartments were rinsed with deionized water.

### EXAMPLE 5

1) A metal-coated membrane prepared as described in EXAMPLE 4 was removed from the device shown in Fig. 2 and positioned in the device shown in Fig. 3.
2) 5 mL of a solution of nickel meso-tetraphenylporphyrin (STREM) in DMF/THF (1:1, v:v), obtained by dissolving 10 g of nickel meso-tetraphenylporphyrin per liter, was deposited on the membrane surface coated with silver (9 cm²). After 2 hours at room temperature, the membrane surface was rinsed with deionized water.
3) The device shown in Fig. 3 was turned upside down, leaving exposed for manipulation the side of the membrane coated with nickel. A 3 mL portion of an acetone solution of a metal complex consisting of cobalt and nickel acetates in a ratio of 60:40 coordinated by a synthetic resin (overall metal content 3 wt%), obtained by dissolving 40 g of the metal-containing resin per liter, was poured in the tank having its bottom constituted by the membrane surface coated with nickel. The synthetic resin was made by reacting, according to patent application WO 2004/036674, 4-{1-[(2,4-di(substituted)-phenyl)-hydrazono]-alkyl}-benzene-1,3-diol with phenol and formaldehyde in the presence of NaOH in water/ethanol at 100°C. After 2 hours, all the liquid covering the membrane surface was removed from the tank, which was rinsed with deionized water. After the last rinsing, the above-mentioned membrane surface was covered by a 5 ml portion of the aqueous NaBH₄ solution described at point 5 and left standing for 1 hour. Afterwards, all the liquid covering the membrane surface was removed from the tank and the membrane surface was rinsed with deionized water.
4) The catalyzed membrane was removed form the device shown in Fig. 3 and soaked in 1 M KOH for 2 h to give, after drying in the air at 30 °C for 2 hours, a MEA of the invention.

### EXAMPLE 6

1) A Morgane ADP (Solvay S. A.) anion-exchange membrane cut to a size of 4 cm by 4 cm was positioned and sealed in the device shown in Fig. 2 as described above wherein the dimensions of the two external compartments were 3 cm x 3 cm x 0.5 cm for a total volume of 4.5 mL. Both sides of the membrane sheet, each exposed surface measuring 9 cm², were exposed to 1 M solution potassium hydroxide (KOH) to exchange the membrane to a hydroxide ion form. After 24 hours, the two compartments were drained of the KOH solutions through outlets 3 and 4 of Fig. 2. Both sides of the membrane were then rinsed with deionized water.
2) Through inlet 1 of Fig. 2 was introduced in the corresponding compartment 4.5 mL of a nickel(II) ion solution in water consisting of either 92.7 g nickel hydroxide and 192.13 g of citric acid per liter of solution or 190 g nickel citrate hydrate (SHOWA Chemicals).
3) Through inlet 2 of Fig. 2 was introduced in the corresponding compartment 4.5 mL of a silver nitrate solution in water consisting of 170 g silver nitrate per liter.
4) After 1.5 hours, outlets 3 and 4 of Fig. 2 were opened and the liquids contained in the two compartments were allowed to drain. Both compartments of the device of Fig. 2 were then rinsed three times with deionized water, and the outlets 3 and 4 were re-sealed.

Each compartment was then filled with 4.5 mL of a water solution of NaBH₄ consisting of 140 g NaBH₄ dissolved per liter. After 3 hours, the liquids were allowed to drain through outlets 3 and 4. The compartments were rinsed with deionized water.

### EXAMPLE 7

1) A metal-coated membrane prepared as described in EXAMPLE 6 was removed from the device shown in Fig. 2 and positioned in the device shown in Fig. 3.
2) 5 mL of a solution of cobalt salen (STREM) in DMF/THF (1:1, v:v), obtained by dissolving 10 g of cobalt salen per liter, was deposited on the membrane surface coated with silver (9 cm²). After 2 hours at room temperature, of the tank, the membrane surface was rinsed with deionized water.
3) The device shown in Fig. 3 was turned upside down, leaving exposed for manipulation the side of the membrane coated with nickel. A 3 mL portion of a solution of hexachloroplatinic acid and ruthenium trichloride in a metal equivalent ratio of 60:40, obtained by dissolving in water 4.5 g of the metals per liter (2.7 g of hexachloroplatinic acid and 1.8 g of ruthenium trichloride, respectively). After 2 hours, all the liquid covering the membrane surface was removed from the tank, which was rinsed with deionized water. After the last rinsing, the above-mentioned membrane surface was covered by a 5 ml portion of the aqueous NaBH₄ solution described at point 5 and left standing for 1 hour. Afterwards, all the liquid covering the membrane surface was removed from the tank and the membrane surface was rinsed with deionized water.
4) The catalyzed membrane was removed form the device shown in Fig. 3 and soaked in 1 M KOH for 2 h to give, after drying in the air at 30 °C for 2 hours, a MEA of the invention.

## Claims

1. MEA for fuel cells including an anion-exchange membrane, the two major surfaces of which are metallized by a porous and electrically conductive metal layer, different for each surface, and in which the anode and cathode electrocatalysts are each deposited respectively on one of said metal layer forming with them a unique, inseparable body.

2. MEA according to claim 1 in which the anodic membrane is whatsoever polymer alkaline anion-exchange membrane.

3. MEA according to claim 2 selected in the class formed by: membranes based on polyolefins, membranes based on fluorinated polyolefins and fluorinated ethylene/propylene copolymers, membranes based on polysulfones, membranes based on ethylene oxide-polyepichlorohydrine copolymers.

4. MEA according to claims 1-3 in which the said porous and electrically conductive metal layer penetrates the membrane itself without reaching contact with the metal layer deposited on the opposite surface.

5. MEA according to claims 3-4 in which the said porous and electrically conductive metal layer is formed by a compound or salt of a metal chosen in the class consisting of Ag, Au, Pt, Ni, Co, Cu, Pd, Sn, Ru, then reduced with a reducing agent.

6. MEA according to the claim 5 in which the said metal salts are selected in the class consisting of: nickel and cobalt citrates, potassium tetrachloroplatinate, silver and cobalt nitrate, potassium tetrachloroaurate.

7. MEA according to claims 1-6 in which catalysts are those known to be able to act as anode catalysts or, respectively, cathode for electrode for fuel cells.

8. MEA according to claim 7 in which the said catalysts are selected in the class consisting of Pt, Ni, Co, Fe, Ru Sn, Pd and mixture thereof.

9. MEA according to claims 1-8 formed by an anion membrane with a silver-coated surface in which the electrocatalyst is cobalt and with the opposite nickel-coated surface in which the electrocatalyst is platinum.

10. MEA according to claims 1-8 formed by an anion membrane having a silver-coated surface in which the electrocatalyst is cobalt and the electrocatalysts in the opposite nickel-coated surface are iron, cobalt and nickel in equivalent amount.

11. MEA according to claims 1-8 formed by an anion membrane having a silver-coated surface in which the electrocatalyst is nickel and the electrocatalysts in the opposite nickel-coated surface are cobalt and nickel in a 60:40 ratio.

12. MEA according to claims 1-8 formed by an anion membrane having a silver-coated surface in which the electrocatalysts is cobalt and the electrocatalysts in the opposite nickel-coated surface are platinum and ruthenium in 60:40 ratio.

13. Procedure for the preparation of a MEA according to claims 1-12, which includes the following steps:
a) treatment of an anion-exchange membrane, of any shape and size, with a concentrated aqueous solution of a strong Brønsted base for some hours, followed by rinsing with deionized water;
b) adsorbing an anionic entity, wherein a desired metal for metallization is contained, on one major side of the membrane by ion-exchange reaction between counter-ions of the membrane and the metal-containing anionic entity;
c) treatment of the surface of the membrane on the opposite side, than that treated in the previous step, with an aqueous solution of a metal salt capable of forming a layer of an insoluble metal hydroxide/oxide over the membrane surface by reaction with the OH- groups contained in the membrane, until all the surface is coated by a precipitate of metal oxide;
d) reduction of the adsorbed metal anions on one side of the membrane and of the supported metal oxide on the opposite side of the membrane to a metallic form by means of an aqueous solution of a reducing agent of the state of the art;
e) adsorption of a catalytic metal precursor or a mixture of catalytic metal precursors, dispersed in a solvent, on a porous metallic layer of the metal-coated membrane that will act as a cathode in a fuel cell;
f) adsorption of a catalytic metal precursor or a mixture of catalytic metal precursors, dispersed in a solvent, on the opposite porous metal layer of the metal-coated membrane described in previous step, that will act as an anode in a fuel cell;
g) reduction of the above-mentioned metal precursors adsorbed on the surface of the metal-coated anode-side membrane to catalytically active metal particles with an aqueous solution of a reagent capable of reducing to a metallic form the metal ion contained in above-mentioned metal precursors.

14. Procedure according to claim 13 in which the said metal precursors used in step (e) are those known to be able to produce active cathode catalysts in fuel cells.

15. Process according to claim 14 in which the saids precursor are nickel or cobalt complexes with polyazamacrocycles, cobalt, nickel and rhodium phthalocyanine or tetraphenylporphyrin, Co salen, Ni salen (salen = N,N'-bis(salicylidene)ethylendiamine), silver nitrate.

16. Procedure according to claim 13 in which the metal precursors used in step (f) are those known to be able to produce active anode catalysts in fuel cells.

17. Procedure according to claim 14 in which the said precursors are compounds of Pt, Ni, Co, Fe, Ru, Sn, Pd and mixture thereof.

18. Procedure according to claim 17 in which the said precursors are selected in the class consisting of: iron, cobalt and nickel acetates and mixtures thereof, metal complexes coordinated to synthetic resins, hexachloroplatinic acid, tetrachloroauric acid, palladium bis-acetate, palladium dichloride, iridium trichloride, rhodium trichloride, tin tetrachloride, ruthenium trichloride and mixture thereof.

19. Procedure according to claim 13 in which the said reducing reagent used in step (g) is selected in the class consisting of: hydrazine, hydrazine hydrate, alkali metal borohydrides, alkali metal hydrosulfite, alkali metal sulphites.

20. Procedure according to claim 19 in which the said reducing reagent used in step (g) is NaBH₄.

21. Procedure according to claims 13-19 in which step (d) is repeated until an uniform coating of both major surfaces of the membrane is obtained.

22. Procedure according to claim 13 in which step (d) precedes steps (b) and (c).

23. Procedure according to claim 13 in which step (c) precedes step (b).

24. Fuel cells including MEAs according to claims 1-8.

25. Fuel cells according to claim 24 in which said fuel cells are low-temperature operating type.

26. Fuel cells according to claim 25 selected in the class consisting of: H₂-fed PEFC, DAFC fed by alcohols and polyalcohols, DOFC fed by glucose, aldehydes, saturated hydrocarbons, carboxylic acids, alkali metal borohydrides, hydrazines.

27. Fuel cells according to claim 24 consisting of cells fed by methanol or ethanol, in which anode catalysts of iron-cobalt-nickel are used, with any per cent relative composition.

28. Fuel cells according to the claim 24 consisting of cells fed by ethylene glycol and polyalcohols, sugars included, in which anode catalysts of cobalt-nickel are used with any per cent relative composition.

## Patentansprüche

1. MEA für Brennstoffzellen, die eine Anionenaustauschmembran enthält, deren zwei Hauptoberflächen mit einer porösen und elektrisch leitenden Metallschicht für jede Oberfläche verschieden metallisiert sind und in der der Anoden- und der Katodenelektrokatalysator jeweils auf einer der genannten Metallschichten abgelagert ist und mit ihr einen einzigen untrennbaren Körper bildet.

2. MEA gemäß Anspruch 1, in der die Anodenmembran irgendeine Polymeralkali-Anionenaustauschmembran ist.

3. MEA gemäß Anspruch 2, die aus der Klasse gewählt ist, die gebildet ist durch: Membranen auf der Grundlage von Polyolefinen, Membranen auf der Grundlage von fluorierten Polyolefinen und fluorierten Ethylen-/Propylen-Copolymeren, Membranen auf der Grundlage von Polysulfonen, Membranen auf der Grundlage von Ethylenoxid-Polyepichlorhydrin-Copolymeren.

4. MEA gemäß Anspruch 1-3, in der die genannte poröse und elektrisch leitende Metallschicht die Membran selbst durchdringt, ohne Kontakt mit der auf der gegenüberliegenden Oberfläche abgelagerten Metallschicht zu erreichen.

5. MEA gemäß Anspruch 3-4, in der die genannte poröse und elektrisch leitende Metallschicht durch eine Verbindung oder ein Salz eines Metalls gebildet ist, das aus der Klasse gewählt ist, die aus Ag, Au, Pt, Ni, Co, Cu, Pd, Sn, Ru besteht, und daraufhin mit einem Reduktionsmittel reduziert worden ist.

6. MEA gemäß Anspruch 5, in der die genannten Metallsalze aus der Klasse gewählt sind, die besteht aus: Nickel- und Cobaltcitraten, Kaliumtetrachloroplatinat, Silber- und Cobaltnitrat, Kaliumtetrachloroaurat.

7. MEA gemäß Anspruch 1-6, in der die Katalysatoren jenen sind, von denen bekannt ist, dass sie als Anodenkatalysatoren bzw. als Katode für eine Elektrode für Brennstoffzellen wirken können.

8. MEA gemäß Anspruch 7, in der die genannten Katalysatoren aus der Klasse gewählt sind, die aus Pt, Ni, Co, Fe, Ru, Sn, Pd und aus einem Gemisch davon besteht.

9. MEA gemäß Anspruch 1-8, die durch eine Anionenmembran mit einer silberbeschichteten Oberfläche, in der der Elektrokatalysator Cobalt ist, und mit einer gegenüberliegenden nickelbeschichteten Oberfläche, in der der Elektrokatalysator Platin ist, gebildet ist.

10. MEA gemäß Anspruch 1-8, die durch eine Anionenmembran mit einer silberbeschichteten Oberfläche, in der der Elektrokatalysator Cobalt ist und die Elektrokatalysatoren in der gegenüberliegenden nickelbeschichteten Oberfläche Eisen, Cobalt und Nickel in äquivalenter Menge sind, gebildet ist.

11. MEA gemäß Anspruch 1-8, die durch eine Anionenmembran mit einer silberbeschichteten Oberfläche, in der der Elektrokatalysator Nickel ist und die Elektrokatalysatoren in der gegenüberliegenden nickelbeschichteten Oberfläche Cobalt und Nickel in einem Verhältnis von 60:40 sind, gebildet ist.

12. MEA gemäß Anspruch 1-8, die durch eine Anionenmembran mit einer silberbeschichteten Oberfläche, in der die Elektrokatalysatoren Cobalt sind und die Elektrokatalysatoren in der gegenüberliegenden nickelbeschichteten Oberfläche Platin und Ruthenium im Verhältnis von 60:40 sind, gebildet ist.

13. Verfahren für die Herstellung einer MEA gemäß Anspruch 1-12, wobei das Verfahren die folgenden Schritte enthält:
a) Behandlung einer Anionenaustauschmembran irgendeiner Form und Größe mit einer konzentrierten wässrigen Lösung einer starken Brønsted-Base für einige Stunden, gefolgt vom Spülen mit entionisiertem Wasser;
b) Adsorption einer Anionenentität, wobei ein gewünschtes Metall für die Metallisierung enthalten ist, auf einer Hauptseite der Membran durch eine lonenaustauschreaktion zwischen Gegenionen der Membran und der metallhaltigen Anionenentität;
c) Behandlung der Oberfläche der Membran auf der Seite, die der, die im vorhergehenden Schritt behandelt wurde, gegenüberliegt, mit einer wässrigen Lösung eines Metallsalzes, die durch Reaktion mit den in der Membran enthaltenen OH⁻-Gruppen über der Membranoberfläche eine Schicht eines unlöslichen Metallhydroxids/-oxids bilden kann, bis die gesamte Oberfläche durch einen Niederschlag von Metalloxid beschichtet ist;
d) Reduktion der adsorbierten Metallionen auf einer Seite der Membran und des gehaltenen Metalloxids auf der gegenüberliegenden Seite der Membran auf eine Metallform mittels einer wässrigen Lösung eines Reduktionsmittels des Standes der Technik;
e) Adsorption eines Katalysatormetallvorläufers oder eines Gemischs von Katalysatormetallvorläufern, der/die in einem Lösungsmittel dispergiert ist/sind, auf einer porösen Metallschicht der metallbeschichteten Membran, die in einer Brennstoffzelle als eine Katode wirken wird;
f) Adsorption eines Katalysatormetallvorläufers oder eines Gemischs von Katalysatormetallvorläufern, der/die in einem Lösungsmittel dispergiert ist/sind, auf der gegenüberliegenden porösen Metallschicht der im vorhergehenden Schritt beschrieben metallbeschichteten Membran, die in einer Brennstoffzelle als eine Anode wirken wird;
g) Reduktion der oben erwähnten auf der Oberfläche der metallbeschichteten Membran auf der Anodenseite adsorbierten Metallvorläufer zu katalytisch aktiven Metallpartikeln mit einer wässrigen Lösung eines Reagenz, das die in den oben erwähnten Metallvorläufern enthaltenen Metallionen auf eine Metallform reduzieren kann.

14. Verfahren gemäß Anspruch 13, in dem die genannten in Schritt (e) verwendeten Metallvorläufer jene sind, von denen bekannt ist, dass sie aktive Katodenkatalysatoren in Brennstoffzellen erzeugen können.

15. Verfahren gemäß Anspruch 14, in dem die genannten Vorläufer Nickel- oder Cobaltkomplexe mit Polyaza-Makrozyklen, Cobalt-, Nickel- und Rhodium-Phtalocyanin oder -Tetraphenylporphyrin, Co-Salen, Ni-Salen (Salen = N,N'-Bis(Salicyliden-)Ethylendiamin), Sibernitrat sind.

16. Verfahren gemäß Anspruch 13, in dem die in Schritt (f) verwendeten Metallvorläufer jene sind, von denen bekannt ist, dass sie in Brennstoffzellen aktive Anodenkatalysatoren erzeugen können.

17. Verfahren gemäß Anspruch 14, in dem die genannten Vorläufer Verbindungen von Pt, Ni, Co, Fe, Ru, Sn, Pd und ein Gemisch davon sind.

18. Verfahren gemäß Anspruch 17, in dem die genannten Vorläufer aus der Klasse gewählt sind, die besteht aus: Eisen-, Cobalt- und Nickelazetaten und Gemischen davon, Metallkomplexen, die an Kunstharzen koordiniert sind, Hexachloroplatinsäure, Tetrachlorogoldsäure, Palladium-Bis-Acetat, Palladiumdichlorid, Iridiumtrichlorid, Rhodiumtrichlorid, Zinntetrachlorid, Rutheniumtrichlorid und ein Gemisch davon.

19. Verfahren gemäß Anspruch 13, in dem das genannte in Schritt (g) verwendete Reduktionsmittel aus der Klasse gewählt wird, die besteht aus: Hydrazin, Hydrazinhydrat, Alkalimetall-Borhydriden, Alkalimetallhydrosulfit, Alkalimetallsulfiten.

20. Verfahren gemäß Anspruch 19, in dem das in Schritt (g) verwendete reduzierende Reagenz NaBH₄ ist.

21. Verfahren gemäß Anspruch 13-19, in dem der Schritt (d) wiederholt wird, bis eine gleichförmige Beschichtung beider Hauptoberflächen der Membran erhalten worden ist.

22. Verfahren gemäß Anspruch 13, in dem der Schritt (d) den Schritten (b) und (c) vorausgeht.

23. Verfahren gemäß Anspruch 13, in dem der Schritt (c) dem Schritt (b) vorausgeht.

24. Brennstoffzellen, die MEAs gemäß Anspruch 1-8 enthalten.

25. Brennstoffzellen gemäß Anspruch 24, in denen die genannten Brennstoffzellen vom Niedertemperaturbetriebstyp sind.

26. Brennstoffzellen gemäß Anspruch 25, die aus der Klasse gewählt sind, die besteht aus: einer mit H₂ gespeisten PEFC, einer mit Alkoholen und Polyalkoholen gespeisten DAFC, einer mit Glucose, Aldehyden, gesättigten Kohlenwasserstoffen, Carboxylsäuren, Alkalimetall-Borhydriden, Hydrazinen gespeisten DOFC.

27. Brennstoffzellen gemäß Anspruch 24, die aus Zellen bestehen, die durch Methanol oder Ethanol gespeist werden, in denen Anodenkatalysatoren aus Eisen-Cobalt-Nickel mit einem beliebigen Prozentsatz relativer Zusammensetzung verwendet werden.

28. Brennstoffzellen gemäß Anspruch 24, die aus Zellen bestehen, die durch Ethylenglycol und Polyalkohole mit darin enthaltenen Zuckern gespeist werden, in denen die Anodenkatalysatoren aus Cobalt-Nickel mit irgendeinem Prozentsatz relativer Zusammensetzung verwendet werden.

## Revendications

1. Ensemble membrane-électrode (MEA) pour piles à combustible incluant une membrane échangeuse d'anions, dont les deux surfaces principales sont métallisées par une couche de métal poreuse et électriquement conductrice, différente pour chaque surface, et dans lequel les électrocatalyseurs d'anode et de cathode sont chacun déposés respectivement sur l'une desdites couches de métal en formant avec elles un corps inséparable, unique.

2. MEA selon la revendication 1 dans lequel la membrane anodique est une membrane quelconque d'échange d'anions alcalins de polymère.

3. MEA selon la revendication 2 choisi dans la classe formée par : des membranes à base de polyoléfines, des membranes à base de polyoléfines fluorées et de copolymères éthylène/propylène fluorés, des membranes à base de polysulfones, des membranes à base de copolymères d'oxyde d'éthylène-polyépichlorhydrine.

4. MEA selon les revendications 1 à 3 dans lequel ladite couche de métal poreuse et électriquement conductrice pénètre dans la membrane elle-même sans entrer en contact avec la couche de métal déposée sur la surface opposée.

5. MEA selon les revendications 3 à 4 dans lequel ladite couche de métal poreuse et électriquement conductrice est formée par un composé ou un sel d'un métal choisi dans la classe constituée de Ag, Au, Pt, Ni, Co, Cu, Pd, Sn, Ru, puis réduite à l'aide d'un réducteur.

6. MEA selon la revendication 5 dans lequel lesdits sels de métaux sont choisis dans la classe constituée de : citrates de nickel et de cobalt, tétrachloroplatinate de potassium, nitrate d'argent et de cobalt, tétrachloroaurate de potassium.

7. MEA selon les revendications 1 à 6 dans lequel les catalyseurs sont ceux connus pour pouvoir agir comme des catalyseurs d'anode ou, respectivement, comme cathode d'électrode pour des piles à combustible.

8. MEA selon la revendication 7 dans lequel lesdits catalyseurs sont choisis dans la classe constituée de Pt, Ni, Co, Fe, Ru, Sn, Pd et de mélanges de ceux-ci.

9. MEA selon les revendications 1 à 8 formé par une membrane anionique ayant une surface revêtue d'argent dans laquelle l'électrocatalyseur est le cobalt et ayant la surface opposée revêtue de nickel dans laquelle l'électrocatalyseur est le platine.

10. MEA selon les revendications 1 à 8 formé par une membrane anionique ayant une surface revêtue d'argent dans laquelle l'électrocatalyseur est le cobalt, et les électrocatalyseurs dans la surface opposée revêtue de nickel sont le fer, le cobalt et le nickel en quantité équivalente.

11. MEA selon les revendications 1 à 8 formé par une membrane anionique ayant une surface revêtue d'argent dans laquelle l'électrocatalyseur est le nickel, et les électrocatalyseurs dans la surface opposée revêtue de nickel sont le cobalt et le nickel dans un rapport 60:40.

12. MEA selon les revendications 1 à 8 formé par une membrane anionique ayant une surface revêtue d'argent dans laquelle l'électrocatalyseur est le cobalt, et les électrocatalyseurs dans la surface opposée revêtue de nickel sont le platine et le ruthénium dans un rapport de 60:40.

13. Procédé pour la préparation d'un MEA selon les revendications 1 à 12, lequel inclut les étapes suivantes :
a) traitement d'une membrane échangeuse d'anions, de forme et de taille quelconques, à l'aide d'une solution aqueuse concentrée d'une base forte de Brønsted pendant plusieurs heures, puis rinçage à l'eau déionisée,
b) adsorption d'une entité anionique, dans laquelle un métal voulu en vue d'une métallisation est contenu, sur une première face principale de la membrane par une réaction d'échange d'ions entre des contre-ions de la membrane et l'entité anionique contenant le métal,
c) traitement de la surface de la membrane sur la face opposée à celle traitée à l'étape précédente, à l'aide d'une solution aqueuse d'un sel métallique capable de former une couche d'un hydroxyde/oxyde de métal insoluble au-dessus de la surface de membrane par réaction avec les groupes OH⁻ contenus dans la membrane, jusqu'à ce que toute la surface soit revêtue d'un précipité d'oxyde de métal,
d) réduction des anions métalliques adsorbés sur une face de la membrane et de l'oxyde de métal supporté sur la face opposée de la membrane en une forme métallique au moyen d'une solution aqueuse d'un réducteur de l'état de la technique,
e) adsorption d'un précurseur métallique catalytique ou d'un mélange de précurseurs métalliques catalytiques, dispersé dans un solvant, sur une couche métallique poreuse de la membrane revêtue de métal qui agira comme une cathode dans une pile à combustible,
f) adsorption d'un précurseur métallique catalytique ou d'un mélange de précurseurs métalliques catalytiques, dispersé dans un solvant, sur la couche de métal poreuse opposée de la membrane revêtue de métal décrite à l'étape précédente, qui agira comme une anode dans une pile à combustible,
g) réduction des précurseurs métalliques mentionnés ci-dessus adsorbés sur la surface de la membrane côté anode revêtue de métal pour activer par voie catalytique des particules de métal à l'aide d'une solution aqueuse d'un réactif capable de réduire en une forme métallique l'ion métallique contenu dans les précurseurs métalliques mentionnés ci-dessus.

14. Procédé selon la revendication 13 dans lequel lesdits précurseurs métalliques utilisés à l'étape (e) sont ceux connus pour pouvoir produire des catalyseurs de cathode actifs dans des piles à combustible.

15. Procédé selon la revendication 14, dans lequel lesdits précurseurs sont des complexes au nickel ou au cobalt avec des polyazamacrocycles, de la phthalocyanine ou tétraphénylporphyrine de cobalt, nickel et rhodium, du Co(salen), du Ni(salen) (salen = N,N'-bis(salicylidène)éthylènediamine), du nitrate d'argent.

16. Procédé selon la revendication 13 dans lequel les précurseurs métalliques utilisés à l'étape (f) sont ceux connus pour pouvoir produire des catalyseurs d'anode actifs dans des piles à combustible.

17. Procédé selon la revendication 14 dans lequel lesdits précurseurs sont des composés de Pt, Ni, Co, Fe, Ru, Sn, Pd et des mélanges de ceux-ci.

18. Procédé selon la revendication 17, dans lequel lesdits précurseurs sont choisis dans la classe constituée de : acétates de fer, cobalt et nickel et mélanges de ceux-ci, complexes métalliques coordonnés à des résines synthétiques, acide hexachloroplatinique, acide tétrachloroaurique, bis-acétate de palladium, dichlorure de palladium, trichlorure d'iridium, trichlorure de rhodium, tétrachlorure d'étain, trichlorure de ruthénium et mélanges de ceux-ci.

19. Procédé selon la revendication 13 dans lequel ledit réactif réducteur utilisé à l'étape (g) est choisi dans la classe constituée de : hydrazine, hydrate d'hydrazine, borohydrures de métaux alcalins, hydrosulfites de métaux alcalins, sulfites de métaux alcalins.

20. Procédé selon la revendication 19 dans lequel ledit réactif réducteur utilisé à l'étape (g) est NaBH₄.

21. Procédé selon les revendications 13 à 19 dans lequel l'étape (d) est répétée jusqu'à ce qu'un revêtement uniforme des deux surfaces principales de la membrane soit obtenu.

22. Procédé selon la revendication 13 dans lequel l'étape (d) précède les étapes (b) et (c).

23. Procédé selon la revendication 13 dans lequel l'étape (c) précède l'étape (b).

24. Piles à combustible incluant des MEA selon les revendications 1 à 8.

25. Piles à combustible selon la revendication 24, lesdites piles à combustible étant de type à fonctionnement à basse température.

26. Piles à combustible selon la revendication 25 choisies dans la classe constituée de : PEFC alimentées en H₂, DAFC alimentées en alcools et polyalcools, DOFC alimentées en glucose, aldéhydes, hydrocarbures saturés, acides carboxyliques, borohydrures de métaux alcalins, hydrazines.

27. Piles à combustible selon la revendication 24 constituées de cellules alimentées en méthanol ou éthanol, dans lesquelles des catalyseurs d'anode en fer-cobalt-nickel sont utilisés, avec une composition relative à pourcentage quelconque.

28. Piles à combustible selon la revendication 24 constituées de cellules alimentées en éthylène glycol et polyalcools, sucres inclus, dans lesquelles des catalyseurs d'anode en cobalt-nickel sont utilisés avec une composition relative à pourcentage quelconque.
